Europäisches Patentamt

European Patent Office

Office européen des brevets

(11) Veröffentlichungsnummer: **0 220 407**
**B1**

(12) **EUROPÄISCHE PATENTSCHRIFT**

(45) Veröffentlichungstag der Patentschrift:
**31.10.90**

(51) Int. Cl.⁵: **B66C 1/02**, B65G 47/91

(21) Anmeldenummer: **86111268.8**

(22) Anmeldetag: **14.08.86**

(54) **Sauggreifeinrichtung.**

(30) Priorität: **30.08.85 DE 3531010**

(43) Veröffentlichungstag der Anmeldung:
**06.05.87 Patentblatt 87/19**

(45) Bekanntmachung des Hinweises auf die Patenterteilung:
**31.10.90 Patentblatt 90/44**

(84) Benannte Vertragsstaaten:
**AT CH DE FR GB IT LI**

(56) Entgegenhaltungen:
AT-B- 347 076
DE-A- 1 960 106
DE-C- 3 228 040
FR-A- 2 152 957
FR-A- 2 156 093
FR-A- 2 156 697
GB-A- 845 835
GB-A- 923 724
NL-C- 67 869
US-A- 2 783 018

(73) Patentinhaber: **Neider, Carmen, Nordstrasse 6,
D-8904 Friedberg 6(DE)**

(72) Der Erfinder hat auf seine Nennung verzichtet

(74) Vertreter: **Gauger, Hans-Peter, Dipl.-Ing., Müller,
Schupfner & Gauger
Maximilianstrasse 6 Postfach 10 11 61,
D-8000 München 1(DE)**

## Beschreibung

Die Erfindung bezieht sich auf eine Sauggreifeinrichtung zum Anheben und Halten von Werkstücken, insbesondere von flächigen Stückgütern.

Bei einer aus der FR-A 2 152 957 bekannten Sauggreifeinrichtung dieser Art ist ein Saugluftkanal, der in dem Innenraum eines gummielastischen Saugnapfes zentral mündet, entlang der Teillänge, die sich axial durch einen Schaft des Saugnapfes erstreckt, zu einer Ventilkammer erweitert, in der eine Kugel frei beweglich angeordnet ist. Diese Kugel bildet ein Einwegventil und verschließt durch ihr Schwergewicht eine als Ventilsitz ausgebildete Mündung der Ventilkammer in bezug auf einen stromabwärts von dieser Mündung ausgebildeten Anschluß einer abgezweigten Teillänge des Saugluftkanals, in welcher eine mit einer verstellbaren Drosselschraube gebildete Drossel ausgebildet ist. Die Ventilkammer weist daneben einen zweiten Ventilsitz für die Kugel im Anschluß an den Saugluftkanal auf, der unmittelbar stromabwärts von der Abzweigung der mit der Drossel versehenen Teillänge des Saugluftkanals ausgebildet ist. Gegen diesen zweiten Ventilsitz wird die Kugel somit entgegen ihrem Schwergewicht nur dann in eine betreffende Schließstellung des Einwegventils angedrückt, wenn es nach dem Aufsetzen des Saugnapfes auf die Oberfläche eines Werkstückes und der danach für dessen Handhabung mittels der Sauggreifeinrichtung bewirkter Haftverbindung zu einer Undichtheit an der Lippe des Saugnapfes kommen sollte und dadurch dann der Umgebungsdruck in den Innenraum des Saugnapfes zugeleitet wird. In dieser Schließstellung des Einwegventils ist dann also die Kugel an diesem zweiten Ventilsitz durch den zugeleiteten Umgebungsdruck entgegen dem Saugdruck vorgespannt.

Bei der bekannten Sauggreifeinrichtung wird durch die frei bewegliche Anordnung der Kugel innerhalb der zu einer Ventilkammer erweiterten Teillänge des Saugluftkanals eine allein strömungsabhängige Arbeitsweise des Einwegventils erhalten, bei welcher das Schwergewicht der Kugel eine maßgebliche Einflußgröße für die Einnahme ihrer unterschiedlichen Sitzstellungen an den beiden mit der Ventilkammer ausgebildeten Ventilsitzen ergibt. Diese Einflußgröße des Schwergewichts ergibt somit auch eine lageabhängige Arbeitsweise des Einwegventils, was in Verbindung mit seiner strömungsabhängigen Arbeitsweise zu größeren Leckverlusten im Dauerbetrieb der Saugvorrichtung führen kann. Dieser Nachteil ergibt sich insbesondere dann, wenn die Saugvorrichtung für die Handhabung von flächigen Stückgütern, wie Blechtafeln oder Kartons, konzipiert ist und dafür dann eine größere Vielzahl von parallel arbeitenden Saugnäpfen vorgesehen sind.

Die durch die Patentansprüche 1 oder 2 gekennzeichnete Erfindung löst die Aufgabe, eine Sauggreifeinrichtung der angegebenen Gattung derart auszubilden, daß in bezug auf die Zuleitung des Saugdruckes zu dem Innenraum des Saugnapfes ein günstigeres Arbeitsverhalten hinsichtlich der Vermeidung übermäßig großer Leckverluste erreichbar ist.

Die mit der erfindungsgemäßen Sauggreifeinrichtung erzielbaren Vorteile ergeben sich vorrangig dadurch, daß durch die Verwendung einer gummielastischen Membrane als Einwegventil und durch die besondere Ausbildung der Bypassleitung mit den beiden in der Arbeitskammer für diese Membrane mündenden Querbohrungen eine äußerst präzise Arbeitsweise des Einwegventils erhalten wird, indem die auf den Ventilsitz bezogenen Schließ- und Offenstellungen der Membrane allein von dem auf sie einwirkenden Differenzdruck abhängig sind. Diese vom Differenzdruck abhängige Arbeitsweise der als Einwegventil verwendeten Membrane ergibt damit nur minimale Leckverluste, weil beispielsweise für die dafür besonders kritische Ansaugphase der Sauggreifeinrichtung in jedem Fall sichergestellt werden kann, daß erst nach der Herbeiführung der Haftverbindung des Saugnapfes mit der Oberfläche des Werkstückes unter der anfänglichen Wirkung der mit der Drossel veränderlich beeinflußbaren Spaltluftmenge die Membrane in ihre Offenstellung überführt wird, in welcher dann erst der volle Saugdruck in den Innenraum des Saugnapfes zugeleitet wird. Es ist damit andererseits auch möglich, für diese Ansaugphase eine veränderliche Reaktionszeit der Sauggreifeinrichtung entsprechend präzise vorzugeben, da es dafür lediglich erforderlich ist, die den Schaltpunkt der Membrane unmittelbar beeinflussende Spaltluft mit einer angepaßten Einstellung der Drossel zu verändern.

In der Zeichnung sind zwei Ausführungsformen der erfindungsgemäßen Sauggreifeinrichtung schematisch dargestellt. Es zeigt:

Fig. 1 einen Längsschnitt der Sauggreifeinrichtung zur Darstellung der Verhältnisse während der Ansaugphase,

Figur 2 die Sauggreifeinrichtung gemäß Figur 1 zur Darstellung der Verhältnisse während der Belüftung des Innenraumes ihres Saugnapfes,

Figur 3 einen Längsschnitt der Sauggreifeinrichtung gemäß einer alternativen Ausführungsform, wobei die Verhältnisse während der Ansaugphase dargestellt sind, und

Figur 4 die Sauggreifeinrichtung gemäß Figur 3 zur Darstellung der Verhältnisse während der Belüftung des Innenraumes ihres Saugnapfes.

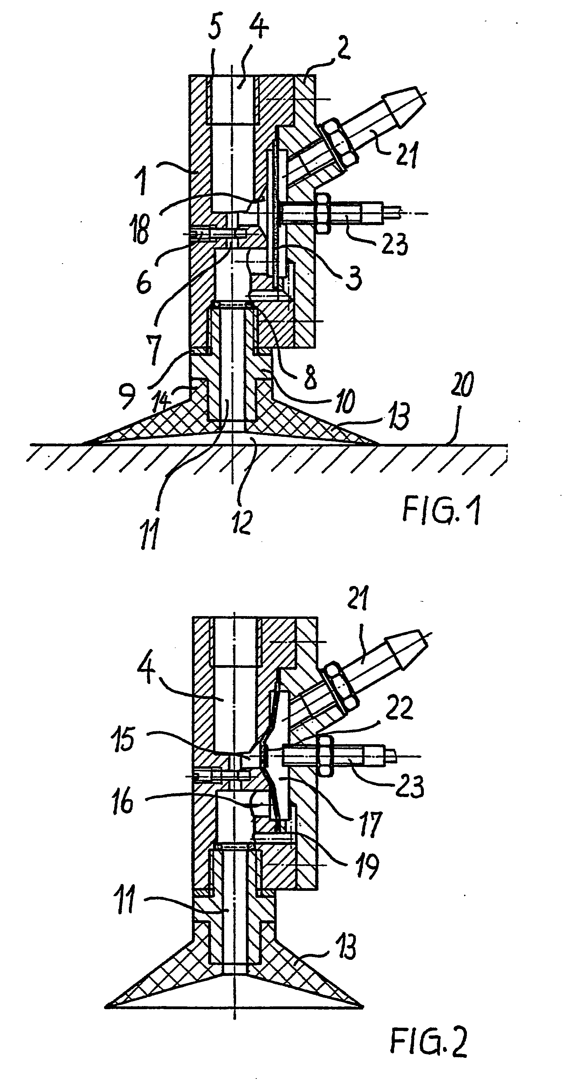

Die in den Figuren 1 und 2 gezeigte Sauggreifeinrichtung umfaßt ein Gehäuse 1 und einen Deckelteil 2, der für eine randseitige Einspannung einer gummielastischen Membrane 3 mit dem Gehäuse 1 verschraubt ist. Das Gehäuse 1 ist mit einer Bohrung 4 versehen, die zur Ausbildung eines Saugluftkanals der Sauggreifeinrichtung über ein Innengewinde 5 an eine Verbindungsleitung mit einer Vakuumpumpe anschließbar ist. Die Bohrung 4 ist in einem mittleren Abschnitt mit einem verkleinerten Durchmesser versehen, wodurch eine mit einer Drosselschraube 6 gebildete Drossel 7 des Saugluftkanals erhalten wird. Stromabwärts von dieser Drossel 7 ist in die Bohrung 4 ein aus einem Drahtgeflecht oder einem Faserstoff- bzw. Kunststoffgewebe bestehendes Sieb 8 eingesetzt, das durch eine mit dem anderen Ende der Bohrung 4 unter Zwischenfügung einer Ringscheibe 9 verschraubten Haltemutter 10 gehalten wird. Eine Bohrung 11 dieser Haltemutter 10 bildet die axiale Fortsetzung des mit der Bohrung 4 gebildeten Saugluftkanals und mündet in den Innenraum 12 eines gummielastischen Saugnapfes 13, in dessen Halteschaft 14 die Haltemutter 10 koaxial eingepreßt ist.

Der mit der Bohrung 4 des Gehäuses 1 gebildete Saugluftkanal weist bezüglich seiner Drossel 7 eine Bypassleitung auf, die mit zwei Querbohrungen 15 und 16 gebildet ist. Die Querbohrungen 15,16 münden in einer zu der Drossel 7 parallel geschalteten Arbeitskammer 17 der Membrane 3, für die zur Bereitstellung eines mit ihr gebildeten Einwegventils an der Mündung der einen Querbohrung 15 ein Ventilsitz 18 ausgebildet ist. Die Arbeitskammer 17 ist im wesentlichen mit dem zum randseitigen Einspannen der Membrane 3 vorgesehenen Deckelteil 2 gebildet und weist über eine weitere Anschlußbohrung 19 eine auch in der Schließstellung der Membrane vorhandene Verbindung mit dem Innenraum 12 des Saugnapfes 13 auf.

Die Membrane 3 nimmt ihre auf den Ventilsitz 18 der mit den Querbohrungen 15,16 gebildeten Bypassleitung bezogene Schließstellung immer dann ein, wenn der Saugnapf 13 abweichend von der Darstellung in Figur 1 nicht auf die Oberfläche 20 eines Werkstückes aufgesetzt ist, das mit der Sauggreifeinrichtung gehandhabt werden soll. Gemäß der Darstellung in Figur 2, welche diese Schließstellung der Membrane 3 zeigt, wird dann aus dem Innenraum 12 des Saugnapfes 13 über die Anschlußbohrung 19 in die Arbeitskammer 17 der Umgebungsdruck zugeleitet, der folglich die Membrane in ihre Schließstellung entgegen dem Saugdruck vorspannt, der über den mit der Bohrung 4 gebildeten Saugluftkanal zugeleitet wird. Über die Drossel 7 des Saugluftkanals wird dann gleichzeitig eine mit der Drosselschraube 6 zur Anpassung an unterschiedliche Ansaugverhältnisse veränderlich einstellbare Spaltluftmenge hin zu einem Austritt an dem Innenraum 12 des Saugnapfes 13 abgeführt. Im Dauerbetrieb der Sauggreifeinrichtung bildet diese unter Vermittlung der Drossel 7 abgeführte Spaltluftmenge den arbeitsbedingten minimalen Leckverlust der Einrichtung, der während jeder Schließstellung der Membrane 3 auftritt und nur anfangs beim Einschalten der über eine Verbindungsleitung an die Bohrung 4 angeschlossenen Vakuumpumpe eine Vergrößerung erfährt, indem dann die Membrane zuerst aus der in Figur 1 gezeigten Offenstellung in die in Figur 2 gezeigte Schließstellung überführt werden muß. Bei dieser Umschaltung wird aber anfänglich eine größere Luftmenge über die mit den Querbohrungen 15,16 gebildete Bypassleitung abgeführt.

In der Ansaugphase der Sauggreifeinrichtung wird nach dem Aufsetzen des Saugnapfes 13 auf die Oberfläche 20 eines Werkstückes zunächst dessen Innenraum 12 gegen den Umgebungsdruck abgedichtet. Die mit der Drosselschraube 6 eingestellte Spaltluftmenge erfährt dann über die Anschlußbohrung 19 eine Zuleitung in die Arbeitskammer 17, so daß wegen des damit bewirkten Abbaus des Umgebungsdruckes die Membrane 3 dann in die in Figur 1 gezeigte Offenstellung in bezug auf ihren Ventilsitz 18 überführt wird. In dieser Offenstellung wird dann der über die Bohrung 4 zugeleitete Saugdruck unter Umgehung der Drossel 7 über die mit den Querbohrungen 15,16 gebildete Bypassleitung direkt an den Innenraum 12 des Saugnapfes 13 zugeleitet, wodurch dessen Haftverbindung mit der Oberfläche 20 des Werkstückes verstärkt und damit jetzt das Werkstück entsprechend sicher angehoben werden kann. Während dieser Ansaugphase wird im übrigen durch das Sieb 8 verhindert, daß an der Oberfläche 20 des Werkstückes evtl. anhaftender Staub und Schmutz zurück in die angeschlossene Vakuumpumpe angesaugt wird bzw. damit die Drossel und ihre Bypassleitung verschmutzt werden können, so daß ein entsprechend störungsfreier Dauerbetrieb der Sauggreifeinrichtung versichert werden kann.

Für eine ergänzende Beschreibung dieses Dauerbetriebs ist dann noch darauf hinzuweisen, daß nach einer abgeschlossenen Handhabung die Haftverbindung zwischen dem Saugnapf 13 und der Oberfläche 20 des Werkstückes wie der durch eine Belüftung des Innenraums 12 des Saugnapfes gelöst werden muß. Diese Belüftung kann entweder mit einer Unterbrechung des bis dahin in den Innenraum 12 zugeleiteten Saugdruckes oder mit einer Zuleitung von Druckluft in die Bypassleitung zu der Drossel 7 resp. in die Arbeitskammer 17 der Membrane 3 gesteuert werden, wofür an dem Deckelteil 2 ein die Ausbildung eines bekannten Fahrrad-Schlauchventils aufweisendes Rückschlagventil 21 angeordnet ist. Sobald unter Vermittlung dieses Rückschlagventils 21 Druckluft in die Arbeitskammer 17 zugeleitet wird, wird dann die Membrane 3 aus der in Figur 1 gezeigten Offenstellung in die in Figur 2 gezeigte Schließstellung überführt. Die Druckluft wird dann über die Anschlußbohrung 19 in den Innenraum 12 des Saugnapfes 13 zugeleitet, um dort einen zum Lösen seiner Haftverbindung ausreichenden Überdruck zu erzeugen. Nach dem Lösen der Haftverbindung kann dann die Zuleitung der Druckluft wieder unterbrochen werden, weil dann der über den Innenraum 12 des Saugnapfes 13 zugeleitete Umgebungsdruck ausreicht, die Membrane in ihre in Figur 2 gezeigte Schließstellung in bezug auf den Ventilsitz 18 vorzuspannen. Die beiden Schaltstellungen der Membrane 3 können im übrigen auch fernüberwacht werden, wenn dafür beispielsweise an der Membrane eine Metallplatte 22 befestigt ist, die mit einem an dem Deckelteil 2 angeordneten induktiven Näherungsschalter 23 zusammenarbeitet, der beispielsweise mit einem optischen oder akustischen Signalgeber elektrisch verbunden sein kann. Alternativ kann die Membrane auch zur Betätigung eines entsprechend angeordneten Mikroschalters vorgesehen werden.

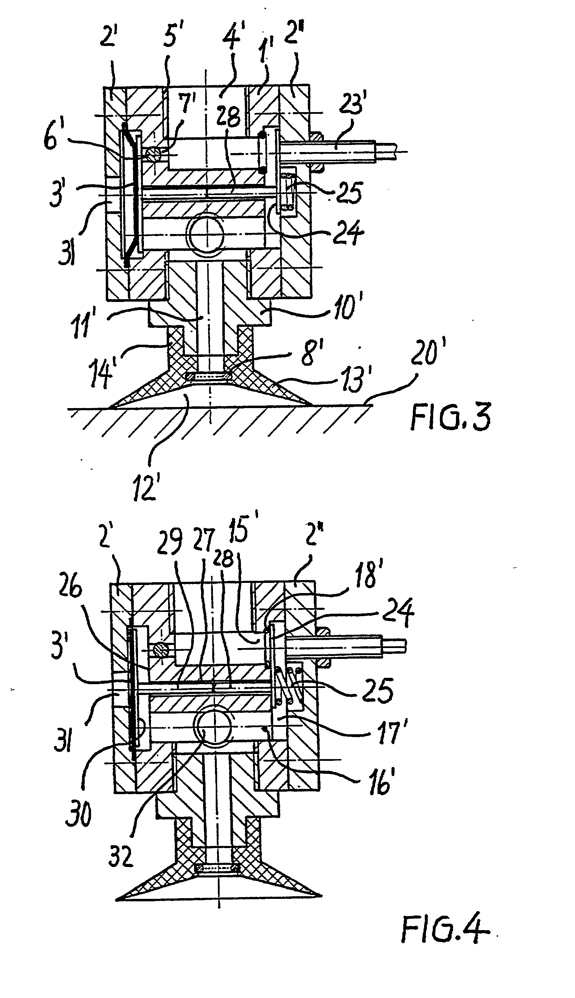

Die in den Figuren 3 und 4 gezeigte alternative Ausführungsform der Sauggreifeinrichtung besitzt eine prinzipiell gleiche Arbeitsweise, weshalb die dafür funktionell übereinstimmenden Bauteile mit gleichen Bezugsziffern, jeweils ergänzt mit einem Strichindex, versehen sind. Mit dieser Ausführungsform wird eine weitere Verkleinerung der Leckverluste primär damit erhalten, daß die auf den Ventilsitz 18' an der Mündung der einen Querbohrung 15' der Bypassleitung bezogene Schließstellung der dafür abweichend angeordneten Membrane 3' entsprechend der Darstellung in Figur 4 auch bei ausgeschalteter Vakuumpumpe vorliegt. Bei jedem Einschalten der Vakuumpumpe wird daher die Luftmenge eingespart, die bei der Sauggreifeinrichtung gemäß den Figuren 1 und 2 während der anfänglichen Umschaltung der Membrane 3 aus der in Figur 1 gezeigten Offenstellung in die in Figur 2 gezeigte Schließstellung verloren geht.

Dieser bei ausgeschalteter Vakuumpumpe unterschiedliche Schaltzustand wird durch eine Schließfeder 25 erhalten, die an einem mit der Membrane 3' verbundenen Ventilteller 24 angreift. Der Ventilteller 24 ist in der den Übergang der beiden Querbohrungen 15',16' bildenden Arbeitskammer 17' angeordnet, die analog der Arbeitskammer 17 zu der Drossel 7' parallel geschaltet ist. Die Schließfeder 25 drückt den Ventilteller 24 gegen seinen mit einem O-Ring gebildeten Ventilsitz 18', womit gleichzeitig die Membrane 3' in eine Offenstellung in bezug auf einen stromabwärts von der Drossel 7' ausgebildeten weiteren Ventilsitz 26 gedrückt wird. Der Ventilteller 24 weist für diese mit der Membrane 3' gekoppelte Verbindung einen in einer Gehäusebohrung 27 geführten Ventilstößel 28 auf, der mit einem ebenfalls in die Bohrung 27 vorstehenden Betätigungsstift 29 für eine an der Membrane 3' befestigte Ventilplatte 30 zusammenwirkt. Durch diese ständige Kopplung der Membrane 3' mit dem Ventilteller 24 wirken die Schließfeder 25, die an einem zweiten verschraubten Deckelteil 2" abgestützt ist, und der Umgebungsdruck gemeinsam, wozu der die Membrane randseitig einspannende Deckelteil 2' mit einer Belüftungsöffnung 31 versehen ist.

Wenn in der Ansaugphase der Sauggreifeinrichtung der Saugnapf 13' entsprechend der Darstellung in Figur 3 auf die Oberfläche 20' eines Werkstückes aufgesetzt wird, so wird dabei in funktioneller Übereinstimmung mit der Sauggreifeinrichtung gemäß den Figuren 1 und 2 der Innenraum 12' gegenüber dem Umgebungsdruck abgedichtet. Der bislang in der Arbeitskammer 17' des Ventiltellers 24 vorherrschende Umgebungsdruck wird dann durch die über die Drossel 7' und die Querbohrung 16' zuströmende Spaltluft abgebaut, so daß der Ventilteller 24 entgegen der Kraft der Schließfeder 25 aus der in Figur 4 gezeigten Schließstellung in die in Figur 3 gezeigte Offenstellung umgeschaltet wird, in welcher dann gleichzeitig die Membrane 3' mit ihrer Ventilplatte 30 durch den Umgebungsdruck gegen den weiteren Ventilsitz 26 angedrückt wird. Der über die Bohrung 4' zugeleitete Saugdruck wird folglich dann über die Bypassleitung an den Innenraum 12' des Saugnapfes 13' weitergeleitet, womit dessen Haftverbindung mit der Oberfläche 20' für eine jetzt mögliche sichere Handhabung des Werkstückes in entsprechender Weise verstärkt wird. Diese Haftverbindung ist andererseits wieder aufhebbar, indem wie bei der Sauggreifeinrichtung gemäß den Figuren 1 und 2 entweder die Zuleitung des Saugdruckes unterbrochen oder auch hier über ein an einer Gewindebohrung 32 an die Querbohrung 16' der Bypassleitung angeschlossenes Rückschlagventil Druckluft zugeleitet wird, die dann in der Weiterleitung an den Innenraum 12' des Saugnapfes 13' dessen Lösen von der Oberfläche 20' bewirkt.

## Patentansprüche

1. Sauggreifeinrichtung zum Anheben und Halten von Werkstücken, insbesondere von flächigen Stückgütern, mit einem gummielastischen Saugnapf (13), dessen Innenraum (12) an einen Saugluftkanal (4) über eine Drossel (7) und über eine Bypassleitung (15, 16) zu der Drossel angeschlossen ist, die innerhalb einer Arbeitskammer (17) in der Bypassleitung ein Einwegventil (3) aufweist, das in eine Schließstellung bezüglich eines am Anschluß der Bypassleitung an den Saugluftkanal ausgebildeten Ventilsitzes (18) durch den über den Innenraum des Saugnapfes zugeleiteten Umgebungsdruck entgegen dem Saugdruck vorgespannt ist, dadurch gekennzeichnet, daß das Einwegventil als innerhalb der Arbeitskammer (17) der Bypassleitung randseitig eingespannten gummielastischen Membrane (3) und die Bypassleitung mit zwei in dieser Arbeitskammer (17) mündenden Querbohrungen (15, 16) zum Saugluftkanal (4) beidseitig der Drossel gebildet sind, wobei mit der Mündung der einen Querbohrung (15) der Ventilsitz (18) für die Membrane ausgebildet ist, in deren Schließstellung die Arbeitskammer bezüglich der Membran auf ihrer den Querbohrungen gegenüberliegenden Seite über eine weitere Anschlußbohrung (19) mit dem Innenraum (12) des Saugnapfes (13) verbunden ist.

2. Sauggreifeinrichtung zum Anheben und Halten von Werkstücken, insbesondere von flächigen Stückgütern, mit einem gummielastischen Saugnapf (13'), dessen Innenraum (12') an einen Saugluftkanal (4', 11') über eine Drossel (7') und über eine Bypassleitung (15', 16') zu der Drossel angeschlossen ist, die ein Einwegventil (13', 28, 24) aufweist, das in eine Schließstellung bezüglich eines am Anschluß der Bypassleitung an den Saugluftkanal ausgebildeten Ventilsitzes (18') entgegen dem Saugdruck vorgespannt ist, dadurch gekennzeichnet, daß das Einwegventil mit einer randseitig eingespannten gummielastischen Membrane (3') und die Bypassleitung mit zwei Querbohrungen (15', 16') des Saugluftkanals (4', 11') gebildet ist, die in einer mit der Bypassleitung ausgebildeten Arbeitskammer (17') für einen mit der Membrane gekoppelten Ventilteller (24) münden, der durch eine den Umgebungsdruck unterstützende Schließfeder (25) in die Schließstellung bezüglich des an der Mündung der einen Querbohrung (15') ausgebildeten Ventilsitzes (18') vorgespannt ist, wobei in dieser Schließstellung des Ventiltellers die Membrane in bezug auf einen stromabwärts von der Drossel (7') ausgebildeten weiteren Ventilsitz (26) eine Offenstellung einnimmt.

3. Sauggreifeinrichtung nach Anspruch 2, dadurch gekennzeichnet, daß die Membrane (3') in ihre auf den weiteren Ventilsitz (26) bezogene Schließstellung durch den der Kraft der Schließfeder (25) des Ventiltellers (24) entgegenwirkenden Umgebungsdruck vorgespannt ist, der über eine Öffnung (31) eines die Membrane randseitig einspannenden Deckelteils (2') zugeleitet wird.

4. Sauggreifeinrichtung nach einem der Ansprüche 1 bis 3, dadurch gekennzeichnet, daß an die Bypassleitung (15, 16, 15', 16') eine für eine Belüftung des Innenraums (12, 12') des Saugnapfes (13, 13') wahlweise durchschaltbare Druckluftleitung angeschlossen ist.

5. Sauggreifeinrichtung nach Anspruch 4, dadurch gekennzeichnet, daß die Druckluftleitung über ein unmittelbar vorgeschaltetes Rückschlagventil (21) zu der Bypassleitung (15, 16; 15', 16') durchschaltbar ist.

## Claims

1. Suction pick-off attachment for lifting and holding workpieces, specifically flat piece goods, comprising a rubber-elastic suction cap (13) whose interior space (12 is connected to a vacuum intake air channel (4) through a throttle (7) and through a line (15, 16) by-passing said throttle, which includes a one-way valve (3) within a working chamber (17) in said by-pass line, said valve being biassed into a closing position relative to a valve seat (18) formed at the connection of said by-pass line to said vacuum intake air channel under the action of the atmospheric pressure which is supplied through the interior space of said suction cap to counteract the suction pressure, characterized in that said one-way valve is formed as a rubber-elastic diaphragm (3) clamped at its edges within said working chamber (17) of said by-pass line while said by-pass line is formed by two bores (15, 16) transverse to said vacuum intake air channel (4) on either side of said throttle, which bores feed into said working chamber (17), while the opening of one of said transverse bores (15) forms the valve seat (18) for said diaphragm, with that side of said working chamber which is opposite to said transverse bores relative to said diaphragm, being connected to said interior space (12) of said suction cap (13) through another connecting bore (19) when said diaphragm is in its closing position.

2. Suction pick-off attachment for lifting and holding workpieces, specifically flat piece goods, comprising a rubber-elastic suction cap (13') whose inside space (12') is connected to a vacuum air intake channel (4', 11') through a throttle (7') and through a line (15', 16') by-passing said throttle, which includes a one-way valve (3', 28, 24) which is biassed into a closing position relative to a valve seat (18') formed at the connection of said by-pass line to said vacuum air intake channel in opposition to the suction pressure, characterized in that said one-way valve is formed as a rubber-elastic diaphragm (3') clamped at its edges while said by-pass line is formed by two transverse bores (15', 16') of said vacuum intake air channel (4', 11'), which bores feed into a working chamber (17') for a valve disk (24) coupled to said diaphragm, which valve disk is biassed into the closing position under the action of a closing spring (25) supporting the atmospheric pressure, relative to the valve seat (18') formed at the opening of one (15') of said transverse bores, with said diaphragm taking an open position relative to the further valve seat (26') formed downstream of said throttle (7') when the valve disk is in said closing position.

3. Suction pick-off attachment according to Claim 2, characterized in that said diaphragm (3') is biassed into its closing position relative to said further valve seat (26) under the action of the atmospheric pressure counteracting the force of the closing spring (25) of said valve disk (24), which atmospheric pressure is supplied through an opening of a cap element (2') clamping said diaphragm by its edges.

4. Suction pick-off attachment according to any of Claims 1 to 3, characterized in that an optionally communicable compressed-air line is connected to said by-pass line (15, 16; 15', 16') to ventilate said interior space (12, 12') of said suction cap (13, 13').

5. Suction pick-off attachment according to Claim 4, characterized in that said compressed-air line may be communicated with said by-pass line (15, 16; 15', 16') through an immediately preceding non-return valve (21).

## Revendications

1. Dispositif preneur-aspirateur pour lever et tenir des pièces à usiner, en particulier des charges isolées planes, comprenant une ventouse (13) à élasticité de caoutchouc dont l'intérieur (12) est raccordé à une conduite d'air aspirée (4) par un étrangleur (7) et par une conduite de dérivation (15, 16) à by-pass dudit étrangleur qui comprend, au dedans d'une chambre de travail (17) dans ladite conduite de dérivation une soupape à passage direct (3) qui est précontrainte, sous l'action de la pression atmosphérique opposée à la pression d'aspiration et alimentée par l'intérieur de ladite ventouse, dans une position d'obturation relative à un siège de contact (18) formé au raccord entre ladite conduite de dérivation et ladite conduite d'air aspirée, caractérisé en ce que ladite soupape à passage direct est formée par un diaphragme (3) à élasticité de caoutchouc (3) fixé par ses bords au dedans de ladite chambre de travail (17) de ladite conduite de dérivation pendant que la conduite de dérivation est formée par deux forages transversaux (15, 16) de ladite conduite d'air aspirée (4) de part et d'autre dudit étrangleur, qui s'ouvrent dans ladite chambre de travail (17), pendant que l'ouverture d'un (15) desdits forages transversaux forme le siège de contact (18) pour ledit diaphragme dont la position d'obturation cause le raccord de la chambre de travail à l'intérieur (12) de ladite ventouse (13) par un autre forage de raccord (19), à son côté opposé auxdits forages transversaux relativement audit diaphragme.

2. Dispositif preneur-aspirateur pour lever et tenir des pièces à usiner, en particulier des charges isolées planes, comprenant une ventouse (13') à élasticité de caoutchouc dont l'intérieur (12') est raccordé à une conduite d'air aspirée (4', 11') par un étrangleur (7) et par une conduite de dérivation (15', 16') à by-passe dudit étrangleur qui comprend une soupape à passage direct (3', 28, 24)) qui est précontrainte, en opposition à la pression d'aspiration, dans une position d'obturation relative à un siège de contact (18') formé au raccord entre ladite conduite de dérivation et ladite conduite d'air aspirée, caractérisé en ce que ladite soupape à passage direct est formée par un diaphragme (3') à élasticité de caoutchouc (3) fixé par ses bords pendant que la conduite de dérivation est formé par deux forages transversaux (15', 16') dans ladite conduite d'air aspirée (4', 11'), qui s'ouvrent dans une chambre de travail (17') pour une tête de soupape (24) accouplée audit diaphragme, laquelle tête de soupape est précontrainte, sous l'action d'un ressort d'obturation (25) aidant la pression atmosphérique, dans la position d'obturation relative au siège de contact (18') formé à l'ouverture d'un (15') desdits forages transversaux, ledit diaphragme prenant sa position d'ouverture relative à un autre siège de contact (26') formé en aval dudit étrangleur (7'), quand ladite tête de soupape se trouve dans sa position d'obturation.

3. Dispositif preneur-aspirateur selon la Revendication 2, caractérisé en ce que ledit diaphragme (3') est précontraint dans sa position d'obturation relative audit autre siège de contact (26) sous l'action de la pression atmosphérique opposée à la force dudit ressort d'obturation (25) de ladite tête de soupape (24), laquelle pression est alimentée par une ouverture (31) d'un élément couvercle (2') fixant ledit diaphragme par ses bords.

4. Dispositif preneur-aspirateur selon quelconque des Revendications 1 à 3, caractérisé en ce qu'une conduite d'air comprimé qui se peut mettre en communication à volonté avec ladite conduite de dérivation (15, 16; 15', 16') pour l'aérage de l'intérieur (12, 12') de ladite ventouse (13, 13').

5. Dispositif preneur-aspirateur selon la Revendication 4, caractérisé en ce que ladite conduite d'air comprimé se peut mettre en communication avec ladite conduite de dérivation (15, 16; 15', 16') par un clapet de non-retour (21) y directement en aval.

FIG.1

FIG.2

EP 0 220 407 B1

FIG.3

FIG.4